# EUROPEAN PATENT APPLICATION

(11) **EP 0 610 755 A1**
(43) Date of publication of application: **17.08.1994**
(21) Application number: 94101292.4
(22) Date of filing: 28.01.1994
(51) Int. Cl.: B01D 67/00, B01D 71/56

(54) **An affinity separation device and its use for immunoglobulin separation**

(30) Priority: 11.02.1993 GB 9302756
(71) Applicant: Pall Corporation, East Hills, New York 11548 (US)
(72) Inventor: Buttery, Roger Alexander, Petersfield, Hampshire, GU32 2JD (GB); Cook, Nigel Jeremy Desmond, Hampshire, P014 4AJ (GB); Gutman, Richard Gay, Dr., Sussex, P019 4QJ (GB); Troth, Harbey Graham, Dr., Drayton, Portsmouth, P06 2AU (GB)
(74) Representative: Geissler, Bernhard, Dr.

(57) **Abstract**

A method for producing a generally cylindrical filter medium and a filter element employing said medium is provided, where the filter medium is pleated and comprises a multi-layered structure of overlapping layers of membrane material. The filter element is particularly suited for separating immunoglobulin from a fluid, where the filter medium is first treated with an activating agent to from activated sites on the membrane surface. The thus treated membrane is then again treated with a protein, specific to a certain immunoglobulin. The fluid containing the immunoglobulin to be separated is then passed through the filter medium, whereby the immunoglobulin is separated cleanly at the activated sites.

## Description

The present invention relates to a method of producing a generally cylindrical filter medium and to an affinity separation device comprising such a filter medium. The invention further relates to the use of such devices for separating a component such as immunoglobulin from a fluid.

The invention generally relates to the field of affinity separation of biological substances from a fluid. Typical substances are immunoglobulins or proteins and are generally referred to herein as "ligates".

A common procedure for removing biological substances from a fluid involves passing the fluid through a packed column containing a polysaccharide gel in the form of beads. The separation procedure is not satisfactory for a number of reasons. The column allows only a low flow rate of the fluid. The time required for separation is correspondingly long and the amount of immunoglobulin recovered per hour is relatively small.

Affinity separation may also be performed with layers of porous membrane material with glass beads embedded therein. This procedure, however, would be difficult to scale up to achieve desired quantities in the range of hundreds of milligrams of immunoglobulin. Breakthrough of the immunoglobulin can occur after relatively short operational times due to reduced depth of the filter, lowering the efficiency of the process.

A considerable need exists in the art for separation methods and devices by which larger quantities of the ligate, e.g. immunoglobulin can be extracted. It is an object of the present invention to provide a device and a method for producing a device which overcomes the above mentioned drawbacks, is simple and inexpensive in fabrication and is capable of separating larger quantities of immunoglobulin.

A further object of the present invention is to provide a method of separation, making use of the claimed filter element, which gives both cleanly separated immunoglobulin (less contaminates), also has a high separation efficiency and is fast compared with column techniques.

In accordance with the invention a method of producing a generally cylindrical filter medium for a filter element is provided as defined in the claims. An elongate piece of membrane material is wrapped to form a hollow structure made up of overlaying layers. Preferably the wrapping takes place about a cylinder or roller. Pleats are then formed in the hollow structure, which extend along the length of and parallel to a longitudinal axis of the generally cylindrical filter medium.

Any suitable affinity separation membrane having an acceptor molecule attached thereto can be used. A polyamide membrane medium is preferred. Particularly suitable membranes comprise surface OH groups, which have been activated by an activating agent. The membranes have an acceptor molecule bound to the surface thereof by means of the activating agent. It will be understood in conjunction with the present invention that the surface of the membrane material refers to the internal surface of the pores of the membrane as well as the external visible surface. The acceptor molecule is generally referred to as the ligand and the molecule to be purified as the ligate.

Wrapping the membrane material to provide a multi-layer structure avoids the necessity of longitudinal seams to join the edges of filter material which may become defective. The step of sealing edges of sheets of membrane material about a cylinder is therefore avoided, simplifying the fabrication process. The two ends of the cylindrical structure are sealed with end caps as is known in this art.

Pleating of the generally cylindrical filter medium has the advantage of providing a larger filter area in a given housing and thus a lower Δp. Furthermore, the multi-layers of the construction greatly increase the internal area (BET surface area) of the filter medium and improves flow distribution.

As will be discussed below, such a filter medium used in a separation process allows a higher flow rate of the fluid to be separated and the multi-layered construction provides a deeper medium which inhibits breakthrough of the ligate.

An affinity separation device is also provided by the present invention as defined in the claims. It comprises a generally cylindrical filter medium provided with pleats and a multi-layered structure of overlapping layers of membrane material as discussed above. The membrane material has acceptor ligand molecules attached to the surface thereof, which are capable of complex formation when contacting a specific ligate.

The separation device is particularly suited for immunoglobulin separation, for example when Protein A is attached to the membrane surface as the acceptor molecule. High flow rates are possible and the BET surface area of the membrane material is large, thus enabling larger quantities of immunoglobulin to be produced. The problem of breakthrough is also effectively counteracted by the use of the multi-layered structure.

A use of the affinity separation device for separating ligates from a fluid is also provided in accordance with the invention as defined in the claims. The ligate-containing fluid or solution is passed through the membrane medium of the device, thereby contacting the acceptor ligand molecules on the surface of the medium, which are capable of specific complex formation with the desired ligate to be removed.

In accordance with a further embodiment of this invention a method or process for separating biologically separable, particularly biologically active, substances from solutions containing these, is provided. This method is defined in the claims.

Preferably a prefiltered impure solution is the starting material. These impure solutions may consist of culture supernatants in general and in particular tissue culture supernatants from which the cells etc. have been removed by prefiltration, preferably to 0.2 µm.

The impure solution is applied to the separation material or device in accordance with this invention. The separation material or device contains the activated sites defined herein. Upon contact with the impure solution, biologically separable substances will be attached to those sites, thereby removing these substances from the impure solution.

Usually the impure solution contains 0.01 to 0.1, typically about 0.05 mg/ml of biologically active substance. This solution is applied to the device or membrane defined herein. For example, a filter cartridge of 5 cm diameter, 5 cm high is employed at a flow rate of preferably 0.1 to 5, more particularly about 1 l/min.. Thereby, 10 to 500 mg, typically 50 to 100 mg of biologically active material is bound to this filter medium of the cartridge. This filter medium is then washed with a phosphate buffer solution to remove impurities. The bound biologically active material is then eluted using another buffer, for example glycine/acetic acid mixture in the case of IgGs, to give a much more concentrated solution of relatively pure IgG, for example a solution with an IgG concentration of 1 mg/ml. Preferably, this more concentrated solution is then further processed to remove the biologically separable, in particular the biologically active substances to obtain a solid material.

Preferably, the device is then washed, in particular with phosphate buffer solution to make it ready for a further purification from a prefiltered impure solution. It is envisaged that this cycle may be repeated tens of times, possibly with an intermediate laundering process where the device is washed, for example, with 4M urea solution at a pH of 6 to remove unwanted contaminating protein and the like which might interfere with the separation process described above.

Thus, the preferred method involves a plurality of cycles, each comprising
- a separation period, in which the impure solution is put into contact with the separation material or device or membrane as herein defined, preferably the solution is passed through the separation material or device or membrane,
- a wash period, in which the separation material device or membrane is washed substantially free of said solution while maintaining a substantial quantity of the biologically separable substance on the separating material or device or membrane,
- an elution period, in which the biologically separable substance is removed from the separating material or device or membrane, preferably to obtain a more concentrated solution of the separable material,
- optionally, an intermediate laundering step, in which the separating material or device or membrane is subjected to a stronger cleaning operation, in particular to remove unwanted or contaminating protein and the like from the separating material or device or membrane.

Preferably 10 to 100 of these cycles are performed with the same separating material or device or membrane before it is discarded.

In a further embodiment of the separation method, an elution solution is passed through the filter medium containing an eluting agent which is capable of detaching the bonded ligate from the activated sites. The so-separated ligate is then recovered from the resulting elution solution.

The use of the device for separation, or as referred to hereinafter, the separation method, has the advantage that ligate is cleanly separated from the fluid by bonding to activated sites. The activated sites are made specific to ligate and therefore the amount of contaminates, for example if the ligate were trapped to the membrane itself, are reduced.

Further embodiments and advantages of the present invention will become apparent in the following description in conjunction with the drawings.

Fig. 1 shows a sectional view of a device according to one embodiment of the invention.

Figs. 2a and 2b show a sectional view of a generally cylindrical filter medium according to a further embodiment of the present invention and an enlarged partial cross-section thereof.

Fig. 3 shows a reaction scheme for a preferred embodiment of the separation method of the present invention.

Fig. 4 shows the results of a separation test making use of the device and separation method in accordance with the present invention.

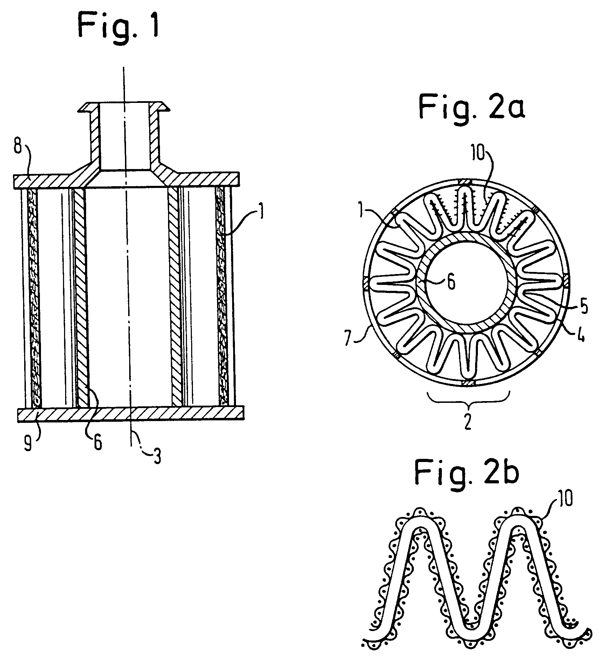

Figs. 1, 2a and 2b show an embodiment of an affinity separation device comprising a generally cylindrical filter medium with pleats 2 extending along the length of and parallel to a longitudinal axis 3 of the filter medium. The filter medium has a multi-layered structure comprising layers of a membrane material.

The membrane material itself is preferably a polyamide membrane medium. The most preferred material is a supported nylon membrane. Other nylon media for the membrane material, modified or not, can be employed. Typical examples of such nylon media are disclosed in the following patents or patent applications EP 005 536, GB-A 2 115 344, EP 272 841, EP 272 842, US 4,968,533, GB 2 116 107, GB 2 163 434, EP 294 186 and EP 245 000. It will be understood that other membrane filter material can also be used in the present invention.

A particularly advantageous membrane is disclosed in EP 272 841 and US 4,968,533, sold by Pall Corporation under the trademark "Bio-Inert®". A treatment of the membrane results in a surface rich in OH groups, which have low protein binding properties. These OH group sites are activated as will be discussed below in conjunction with the separation method.

The membrane material preferably has a thickness in the range of 100 to 250 microns, more preferably in the range of 150 to 200 microns. Furthermore, the membrane material preferably has a BET surface area in the range of 200 to 600 cm²/cm², more preferably in the range of 300 to 500 cm²/cm². This relatively high surface area in conjunction with pleating and the multi-layered structure of the membrane material provides an extremely large surface area, which is highly desirable for the purposes of separation concerned here.

The present method of producing a generally cylindrical filter medium comprises providing an elongate piece of membrane material. A hollow structure is made of the membrane material by wrapping it to form overlapping layers in a spiral-type winding. The membrane material is preferably wrapped about a cylinder or roll. This results in a structure in which successive layers lie on top of one another, without joining sheets of material along a seam longitudinal to the cylindrical axis. The winding should be relatively tight, in order to ensure the integrity of the filter medium after corrugation or pleating, to be discussed below. The tightness of the winding is not however critical. The membrane should not be damaged, but as pointed out above, the filter is used for affinity separation and not separation in the sense of a filtration.

Calculations have shown that a possible leakage or direct flow of the fluid to be filtered through the spiral flow path created by the winding is completely negligible.

After wrapping, a structure results which is hollow and of cylindrical form. Pleats are then formed, which extend along the length of the longitudinal axis 3. The resulting filter medium is generally cylindrical, pleated or corrugated and is multi-layered. The cylindrical structure is then sealed preferably into plastic end caps, in particular PBT, by processes known to those skilled in the art of filter fabrication.

A typical separation device of the present invention is shown in Figs. 2a and 2b. An example of the dimensions is an outside diameter of 5 cm and a height of 5 cm. The outer surface area when unfolded has an area of 187 cm². The total area of the filter membrane (where 16 layers are employed) would then be about 3000 cm². With a typical nylon membrane having a BET surface area of 400 cm²/cm², the total surface area is 187 x 16 x 400 = 1,196,800 cm² or about 120 m².

In view of this possibility of greatly enhancing the surface area, a single separation device may be capable of absorbing without breakthrough of the ligate 100 mg and often more of ligate, such as immunoglobulin IgG from a dilute solution. A system of such separation devices could be scaled up to larger, industrial capacities in the range of grams of IgG.

It has been found that the filter medium should comprise at least 4 membrane layers. 4 to 30 membrane layers are preferred, most preferably 10 to 20 membrane layers. The filter medium is preferably provided with 10 to 30 pleats. The embodiment of Figs. 2a and 2b shows an example of 16 pleats. 12 to 20 pleats are most preferred. Also the filter pleats preferably contain a suitable coarse mesh 10 to provide satisfactory upstream and downstream drainage (drainage nets).

The radial extension of each pleat from an inner end 5 to an outer end 4 is preferably in the range of 0.5 to 2.0 cm, more preferably in the range of 1.0 to 1.5 cm. In a further embodiment of the present filter element, an inner support core 6 is provided within the pleated medium and contacting the inner ends 5 of the pleats. In addition, an outer support cage 7 is provided contacting the outer ends 4 of the pleats.

The capping means 8, 9 are of the conventional type known in this art. When desired, it is also possible to provide a coarse filtration layer on the outside of the filter material to act as a pre-filter.

The operating conditions of an affinity separation device according to the invention have been tested. Filters of 5 cm diameter and 5 cm height were made with 16 layers of a nylon 6,6 membrane with OH groups on its surface. The membrane has a pore rating of 0.2 µm and is available from Pall Corporation under the name Bio-Inert®. The filter medium had 16 pleats of 1 cm height and a drainage net was provided upstream and downstream of the medium. The total area of the medium was about 3000 cm². The water flow versus Δp curve was measured with the following results

| Water flow (liters per minute) | Δp (bar) |
|---|---|
| 0.5 | 3 |
| 0.7 | 5 |
| 1.0 | 7 |
| 1.2 | 9 |

A theoretical value for Δp was calculated from the product information bulletin of Pall Corporation available under the title "Nylon Membrane Filter Media" (DISCSO Oct. 1989). For the 0.2 µm medium used in the above cartridge, a Δp of 6.5 bar resulted for the flow rate of 1 liter per minute. This is in acceptable agreement with the measured value (7 bar) considering no allowance has been made for housing pressure loss. The comparison also indicates that there is no flow in the spiral slot between the layers. It also illustrates that the distribution provided by the downstream drainage layer allows adequate flow from all areas of the device.

In accordance with the present invention, the cartridge device is used for the separation of a ligate from a fluid. The separation procedure employs the filter medium comprising layers of biologically activated membrane material as discussed above. In a preferred embodiment of the separation method, the membrane material is a polyamide membrane, preferably a nylon.

The filter medium has also been contacted with acceptor ligand molecules. The activated sites of the membrane covalently bind the acceptor ligand molecules, which in turn have the capability of specifically binding the ligate to be separated. Protein A is the particularly preferred acceptor ligand molecule.

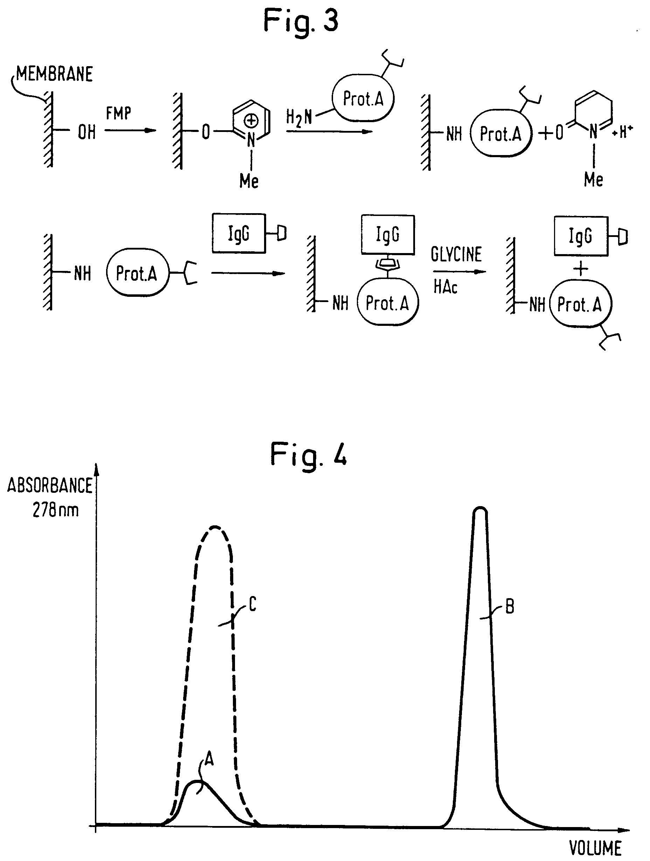

The reaction scheme for one embodiment of the present separation method is given in Fig. 3. Other schemes can be contemplated. In addition the actual mechanisms shown in Fig. 3 are those believed to be responsible, however, this example is to be understood in a non-limiting way.

After the Protein A has been attached to the activated sites, the fluid containing the immunoglobulin to be separated is passed through the filter medium, whereby the immunoglobulin is removed or separated from the fluid by binding to the Protein A. In a preferred embodiment, the fluid containing immunoglobulin to be separated is pre-filtered before this step. It has been found that the pre-filtration removes contaminants and prevents blocking of the filter medium in the cartridge. The lifetime and efficiency of the medium is increased by this pre-filtration.

It is also preferred that the fluid containing immunoglobulin to be separated is provided as a neutral solution in phosphate buffered saline.

The saline solution is conducive to separation of immunoglobulin by providing near physiological conditions for the reaction.

In a further embodiment, an elution solution is passed through the filter medium. An eluting agent is present in the solution which is capable of detaching the specifically bonded immunoglobulin from the activated sites. The immunoglobulin contained in the solution after passing the filter medium is then recovered. Any suitable eluting agent can be employed, such as phosphate buffers. Particularly preferred is an elution solution comprising glycine/acetic acid at a pH of about 3.

### EXAMPLE I

The following example illustrates the separation method of the present invention using the above described device. The membrane available from Pall Corporation was employed, which is described in the European Patent EP 272 841, EP 272 842 and US 4,968,533. The pleated structure had the above mentioned dimensions, 5 cm diameter and a 5 cm cylindrical height. The medium had 16 pleats and included 16 layers of membrane material. The OH groups of the membrane are activated to provide covalent bonding of proteins, while the remaining inactive OH groups will not bind protein. In other words the separation takes place at activated sites and not for example through trapping or attachment to any other surfaces of the membrane material.

The membrane in the layers of the filter element were activated using fluoromethyl-pyridinium tosylate (FMP). The reaction scheme for this particular example is given in Fig. 3. The filter was impregnated with FMP (6 mg/ml) in acetonitrile containing 1% triethylamine for 45 minutes. The FMP reacts with the OH groups which can further react with proteins, such as Protein A. After activation with FMP, the filter medium is washed in acetonitrile, dried and then treated with Protein A (6 mg/ml) for 1 hour.

The filter material was then further treated with 1% ethanolamine pH 9.5 to remove any unwanted activation and preserve the low protein binding nature of the membrane itself. The membrane was also treated with 4 M urea at pH 8 in phosphate buffer solution (PBS) to remove any loosely bound Protein A. The membrane was then subjected to a final wash with PBS.

As is known, Protein A binds to the Fc region of IgGs under neutral conditions in PBS solution. The immunoglobulin is then passed through the membrane layers of the filter medium in PBS solution, where specific binding to Protein A takes place. As mentioned above, this solution or fluid containing immunoglobulin is preferably pre-filtered before passing through the filter medium.

If the filter medium is washed with PBS, after immunoglobulin binding, only a negligible amount of immunoglobulin is removed. However, the impurities present in the original solution are washed out.

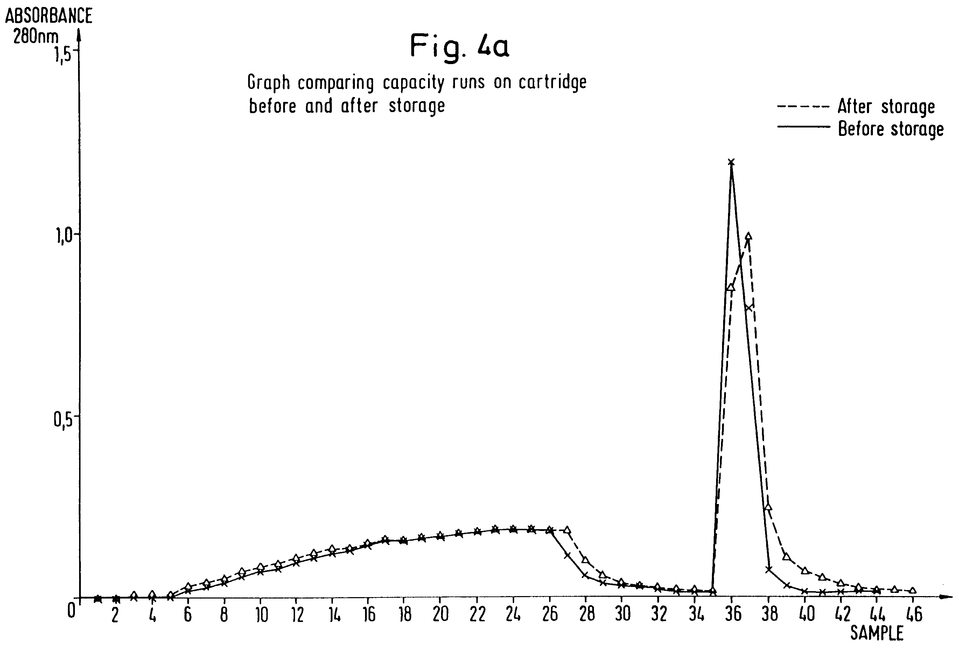

In the present example, a 0.1 M glycine solution with 2% acetic acid (pH 3) was employed as the elution solution. Fig. 4 shows diagrammatically the results of the UV traces of the present example. 100 mg of IgG in 1 liter of PBS was pumped through a low volume housing containing the device at 300 ml/minute and 3.5 bar pressure. Rabbit IgG was employed. 85 mg binds to the medium while 15 mg passes through. The 15 mg is seen in Fig. 4 as the first small peak indicated by A. The second peak B is the eluted 85 mg of IgG obtained after application of the elution solution at the point indicated by an arrow in Fig. 4. Also shown in Fig. 4 is a control run (C in Fig. 4) where 100 mg of IgG had been passed through the system without a filter element being present. This is shown as the dotted line indicated with C in the diagram. Thus a mass balance was achieved.

The above example could be repeated several times without loss of activity of the membrane material. At least 10 repetitions were possible without deterioration of the separation efficiency results.

### EXAMPLE II

This experiment was undertaken to test saturation binding capacity. Human IgG at a concentration of 0.2 mg/ml was pumped through the separation device at 0.5 l/min.. The binding capacity results are shown in Fig. 4a. The absorbance builds up to a plateau value, which has the same value as the feed solution. The membrane is then washed with PBS until the baseline is substantially regained and the bonded human IgG was then eluted with 1.0 M glycine/2% acetic acid at pH 3. Elution took place at 0.25 l/min. The elution peak as seen in Fig. 4a is seen as very sharp.

In this test 480 mg of human IgG was applied to the membrane material and the breakthrough value was 75 mg. 405 mg of IgG was passed through the device after this and 160 mg was bound to the membrane surface, 246 mg passed straight through and 41 mg was contained in the washing phase. By calculation then, 195 mg of IgG should have been in the eluted peak. 206 mg was observed and this is considered to be a reasonable mass balance within experimental error.

A second experiment was conducted after storage of the separation device for two weeks. The absorbance of the fractions is also plotted in Fig. 4a against the fraction number. Both tests gave nearly identical results.

### EXAMPLE III

A further example was performed with a strongly bound dye which mimics the absorption properties of IgG. It was found that the dye could be removed with an acid solution, for example, 5 per cent HCl in a 50 to 50 mixture of water/butyl alcohol. Tests showed that when dyeing was performed at approximately 75% of the membranes capacity, the dye concentration decreased rapidly beyond layer 11 through layers 12 and 13, while layers 14, 15 and 16 remained white showing that the filter was performing in an ideal manner, independent of the fact that it is pleated.

## Claims

1. An affinity separation device comprising a generally cylindrical filter medium provided with pleats extending along the length of and parallel to a longitudinal axis of the cylindrical filter medium, said filter medium having a multi-layered structure comprising layers of a membrane material, said membrane material having acceptor molecules, capable of complex formation with a ligate, attached thereto.

2. A device of claim 1, wherein the membrane material is characterized by one or more of the following features:
a) it is a polyamide membrane medium, in particular a supported or non-supported nylon membrane,
b) the membrane material has OH-groups attached to the surface thereof,
c) the membrane material has a thickness in the range of 100 to 250 µm, in particular in the range of 150 to 200 µm,
d) the membrane material has a BET surface area in the range of 200 to 600 cm²/cm², in particular in the range of 300 to 500 cm²/cm².

3. A device of claim 1 or 2, wherein the multi-layered structure is characterized by one or more of the following features:
a) the structure is a spiral winding with superimposed zigzag structure,
b) the structure is formed as a spiral winding of membrane material about said longitudinal axis followed by pleat formation,
c) the multi-layered structure comprises at least 4 membrane layers, in particular 4 to 30 membrane layers, more particularly 10 to 20 membrane layers,
d) the generally cylindrical filter medium is provided with 10 to 100 pleats, in particular 12 to 20 pleats about said longitudinal axis,
e) each pleat from an inner end to an outer end measures in the range of 0.5 to 5.0 cm, in particular in the range of 1.0 to 1.5 cm.
f) the ends of the filter medium are arranged fluid tight in an end cap, at least one of which has an opening forming a connection to the inside.

4. A device of one of the preceding claims, wherein a drainage layer is provided on at least one side of said multilayered structure, said drainage layer being preferably constructed from a net or a mesh, particularly one made from inert plastic material.

5. A device of one of the preceding claims wherein said acceptor molecule is a functional protein, particularly recombinant Protein A, more particularly wherein said protein is attached to said membrane via an activating agent with which the membrane material has been treated.

6. Method of producing a generally cylindrical filter medium for an affinity separation device comprising:
a) providing an elongate piece of membrane material,
b) wrapping the membrane material to form a hollow structure made up of overlapping layers of membrane material, preferably by wrapping the membrane material about a cylinder,
c) forming pleats in said structure, the pleats extending along the length of and parallel to a longitudinal axis of the thus-formed generally cylindrical filter medium.

7. Method of claim 6, wherein the membrane material or respectively the filter medium structure is/are as defined in one of the preceding claims.

8. Use of the device of one of the claims 1 to 5 for affinity separation of a ligate from a fluid comprising:
a) passing the fluid containing the ligate to be separated through the filter medium of said device, the attached acceptor molecules being capable of specifically binding with said ligate.

9. The use of claim 8, wherein the separation further comprises:
b) passing an elution solution through the filter medium, the eluting agent being capable of detaching the bonded ligate from the membrane material,
c) recovering the ligate from the elution solution.

10. The use of claim 8 or 9, wherein the ligate is an immunoglobulin of the IgG class.

11. The use of one of the claims 8 to 10, wherein the membrane material used in step a) is a polyamide membrane which has been previously treated to have OH groups attached to the membrane surface and this membrane then has been treated with said activating agent to react it with said OH groups, particularly wherein the activating agent is selected from the group consisting of fluoromethylpyridinium tosylate or acryloyl chloride, acetyl chloride, thionyl chloride, and poly(acryloyl chloride).

12. The use of one of the claims 10 or 11, wherein the fluid containing immunoglobulin to be separated is a solution of phosphate buffered saline, preferably a neutral solution.

13. The use of one of the claims 10 or 11, wherein the fluid containing immunoglobulin to be separated is prefiltered.

14. The use of one of the claims 8 to 13, wherein the elution solution comprises glycine/acetic acid.

15. Process for separating biologically separable, more particularly biologically active substances from impure solutions containing same, said process comprising
contacting said impure solution with a product, namely a separating material or device or membrane, in accordance with one of the preceding claims, thereby separating said substance from said solution by immobilizing it at said product,
and removing said remaining impure solution from said product.

16. Process in accordance with claim 15, further comprising recovering said separated substance from said product, preferably by elution.

17. Process in accordance with claim 15 or 16, comprising
- immobilizing said substance at said product,
- removing impure solution from said product by washing said product while maintaining a substantial quantity of said substance on said product,
- eluting said product and thereby removing substance from said product, preferably obtaining a more concentrated solution of said substance in comparison with said impure solution,
- optionally laundering said product to remove unwanted and/or contaminating proteins and other alien materials from the product.

18. Process in accordance with claims 15, 16 or 17, wherein the steps are repeated, preferably in the form of 10 to 100 cycles.

19. Process in accordance with one of claims 15 to 18, characterized by employing the conditions or respectively steps of one or more of the use claims herein.
